Europäisches Patentamt

European Patent Office

Office européen des brevets

(19)

(11)     EP 0 903 049 B1

(12)     FASCICULE DE BREVET EUROPEEN

(45) Date de publication et mention
de la délivrance du brevet:
**14.04.2004  Bulletin 2004/16**

(51) Int Cl.⁷: **H04Q 7/38**

(86) Numéro de dépôt international:
**PCT/FR1997/001006**

(21) Numéro de dépôt: **97927250.7**

(22) Date de dépôt: **06.06.1997**

(87) Numéro de publication internationale:
**WO 1997/047150 (11.12.1997 Gazette 1997/53)**

(54) **PROCEDE DE GESTION DES TRANSFERTS INTERCELLULAIRES DES RADIOCOMMUNICATIONS DANS UN SYSTEME DE RADIOCOMMUNICATION CELLULAIRE**

VERFAHREN ZUR EINLEITUNG DES WEITERREICHENS VON GESPRÄCHEN IN EINEM ZELLULARFUNKSYSTEM

METHOD FOR THE MANAGEMENT OF RADIOCOMMUNICATION INTERCELL HANDOVERS IN A CELLULAR RADIOCOMMUNICATION SYSTEM

(84) Etats contractants désignés:
**CH DE FI FR GB IT LI NL SE**

(30) Priorité: **07.06.1996  FR 9607083**

(43) Date de publication de la demande:
**24.03.1999  Bulletin 1999/12**

(73) Titulaire: **Thales
75008 Paris (FR)**

(72) Inventeur: **MONOT, Jean-Jacques,
Thomson-CSF S.C.P.I
F-94117 Arcueil Cedex (FR)**

(56) Documents cités:
**EP-A- 0 589 278          DE-A- 4 414 428**

• **POLLINI G P: "TRENDS IN HANDOVER DESIGN" IEEE COMMUNICATIONS MAGAZINE, vol. 34, no. 3, mars 1996, NEW YORK, US, pages 82-90, XP000557380**

## Description

La présente invention concerne un procédé pour la gestion des transferts intercellulaires des communications dans un système de radiocommunication cellulaire de type GSM.

Elle s'applique notamment à la mise en oeuvre de systèmes de radiocommunication cellulaire en milieu urbain où la densité de trafic nécessite une multiplication des cellules et par conséquent une diminution de leur taille.

Dans ces systèmes, tels que ceux décrits, par exemple dans les demandes de brevets DE-A- 4 414 428 et EP-A- 0 589 278, la couverture radioélectrique d'un territoire se fait en utilisant des macrocellules encore appelées cellules parapluie qui englobent chacune un ensemble de microcellules jointives, chaque cellule possédant une station de base d'émission et de réception. La station de base d'une cellule parapluie est généralement disposée en un endroit surélevé par rapport à la surface du sol, sur le toit d'un immeuble par exemple, et sa puissance d'émission est définie pour lui permettre une diffusion de l'information dans une zone circulaire de rayon atteignant plusieurs kilomètres. De façon différente chaque station de base d'émission réception d'une microcellule dessert une zone de faible rayon atteignant quelques centaines de mètres, et leurs aériens d'émission-réception sont généralement situés en dessous du niveau du toit des immeubles sur des poteaux d'éclairage public par exemple.

La cellule parapluie permet d'absorber le surplus de trafic apparaissant dans une micro-cellule et de gérer les trous de couverture dans le déploiement micro-cellulaire. Les microcellules permettent l'augmentation du trafic dans une zone donnée, et de palier à une couverture gênée par des obstacles. Cependant la constitution de microcellules de petites dimensions entraîne une complexité des traitements des transferts des communications entre microcellules car plus la taille des microcellules est réduite plus il devient nécessaire de gérer de plus en plus fréquemment les transferts entre cellules, et ce d'autant plus que la vitesse de déplacement des mobiles en communication dans le réseau cellulaire ainsi formé est grande. Cette difficulté fait courir des risques de congestion du réseau multicellulaire qui passe un temps considérable pour gérer les signaux de signalisation qui accompagnent chaque transfert. Elle se rencontre notamment dans les réseaux radio mobile GSM dans lesquels aucune distinction n'est faite entre les mobiles en communication, hormis leur classe de puissance ce qui rend difficile un suivi des mobiles en communication pour permettre le délestage des communications des mobiles rapides sur la cellule parapluie.

Le but de l'invention est de palier les inconvénients précités.

A cet effet l'invention a pour objet, un procédé de gestion du transfert intercellulaire de communications de stations mobiles dans un système de radiocommunication cellulaire comportant un nombre déterminé de microcellules à l'intérieur de cellules parapluie possédant chacune respectivement une station de base pour permettre l'acheminement des communications, caractérisé en ce qu'il consiste lorsque la station mobile est sous le contrôle d'une station de base d'une microcellule à compter le nombre de transferts $H_O$ effectuées entre microcellules par la station mobile durant un intervalle d'observation déterminé $T_O$, à calculer un taux de transfert $H_O/T_O$ pour effectuer le transfert des communications vers la station parapluie lorsque le taux de transfert est supérieur à une valeur de seul déterminée, à maintenir le transfert des communications vers la station de base de la microcellule lorsque le taux de transfert est inférieur à la valeur de seuil déterminée et en ce qu'il consiste lorsque la station mobile est sous le contrôle d'une cellule parapluie à mesurer par une goniométrie une vitesse de déplacement virtuelle de la station mobile relativement à la station de base de la cellule parapluie de façon à effectuer un transfert des communications vers une station de base d'une microcellule lorsque la vitesse mesurée par la goniométrie est inférieur à une valeur de seuil déterminée

D'autres caractéristiques et avantages de l'invention apparaîtront dans la description qui suit faite en regard des dessins annexés qui représentent :

- la figure 1, une structure de réseau cellulaire selon l'invention;
- les figures 2 et 3, des schémas de l'organisation fonctionnelle d'un réseau GSM ;
- la figure 4, un réseau GSM incorporant dans une cellule parapluie un radiogoniomètre selon l'invention ;
- la figure 5, un mode de réalisation d'un radiogoniomètre associé à une station de base d'une cellule parapluie pour la détection de l'angle d'arrivée des bursts de message émis par les stations mobiles ;
- la figure 6, une illustration d'une propagation d'une onde radio multitrajet entre une station mobile et une station de base ;
- la figure 7, un algorithme sous la forme d'un organigramme pour l'attribution de la gestion des transferts des communications des stations mobiles aux microcellules ou à la station parapluie.

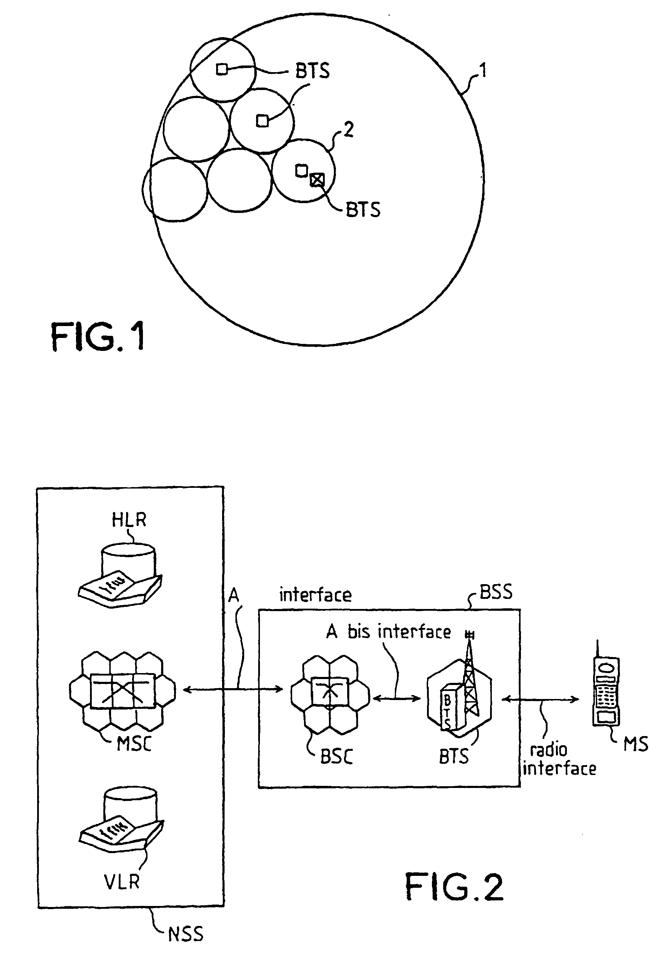

La structure du réseau cellulaire qui est représentée à la figure 1 comprend au moins une macrocellule parapluie 1 et un nombre déterminé de microcellules 2 jointives disposées à l'intérieur de la macrocellule 1.

Les microcellules ainsi que la macrocellule parapluie comportent, disposée en leur centre, une station de base appelée BTS, d'émission d'ondes radioélectriques dont la puissance d'émission et le diagramme de rayonnement délimitent les zones de territoire occupées respectivement par les microcellules 2 et la cellule parapluie 1. Dans un réseau GSM cette structure, définie un réseau de communication cellulaire qui permet l'établissement de communications numériques entre des mobiles qui se déplacent sur le territoire occupé par les différentes cellules 1 et 2 du réseau et des abonnés du réseau public commuté. L'établissement des communications est assuré grâce à une série de fonctions qui sont celles requises dans tout réseau de communication radio mobile à savoir la numérotation, l'acheminement des communications vers les usagers mobiles, le transfert des communications entre cellules lorsque les mobiles quittent le territoire occupé par une cellule pour pénétrer sur le territoire d'une cellule adjacente etc... Classiquement ces fonctions sont regroupées dans des unités fonctionnelles représentées à la figure 2 et composées de stations mobiles MS, d'un sous système radio BSS et d'un sous système de gestion et d'acheminement NSS.

La station mobile MS permet à l'usager d'accéder aux services de communication offerts. Chaque sous système radio BSS assure les communications sur tout le territoire délimité par une cellule. Fonctionnellement, ce système comporte une fonction de commande assurée par un contrôleur de station de base BSC et une fonction de transmission radio supportée par les stations de base BTS de chaque cellule. Ces derniers gèrent les liaisons radioélectriques avec les stations mobiles MS. Les relations entre une station de base BTS et un contrôleur de station de base BSC sont définies par des circuits d'interfaces normalisées connues sous le nom de "Abis". Les contrôleurs de station de base BSC sont couplés au reste du réseau GSM par des interfaces notés A.

Le sous système de gestion et d'acheminement NSS se compose de trois éléments, un commutateur de service mobile MSC chargé de l'acheminement des communications à destination des mobiles dans une cellule, une base de donnée HLR pour enregistrer les paramètres permanents d'un abonné et la localisation de sa station mobile, une base de donnée VLR où est enregistrée une localisation plus fine des stations mobiles en zone d'appel.

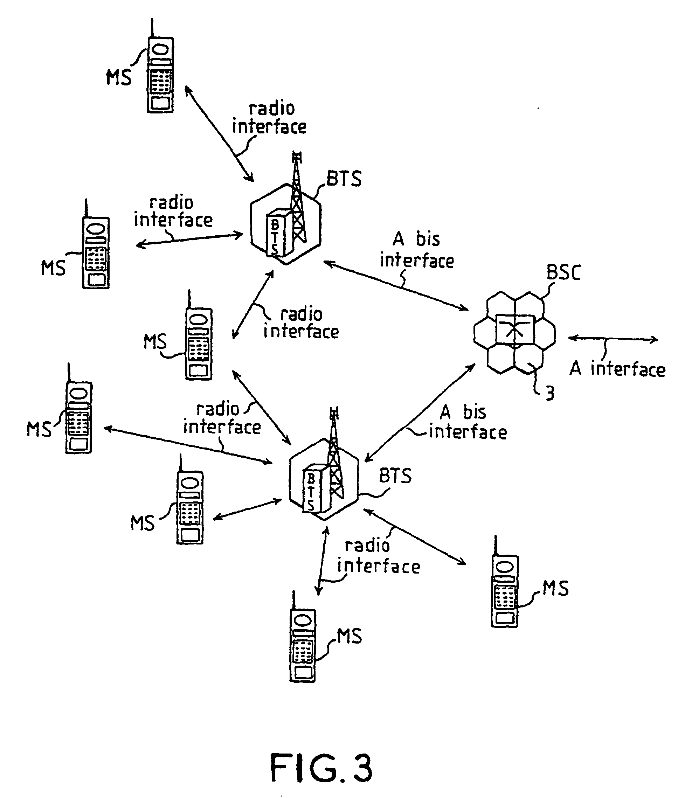

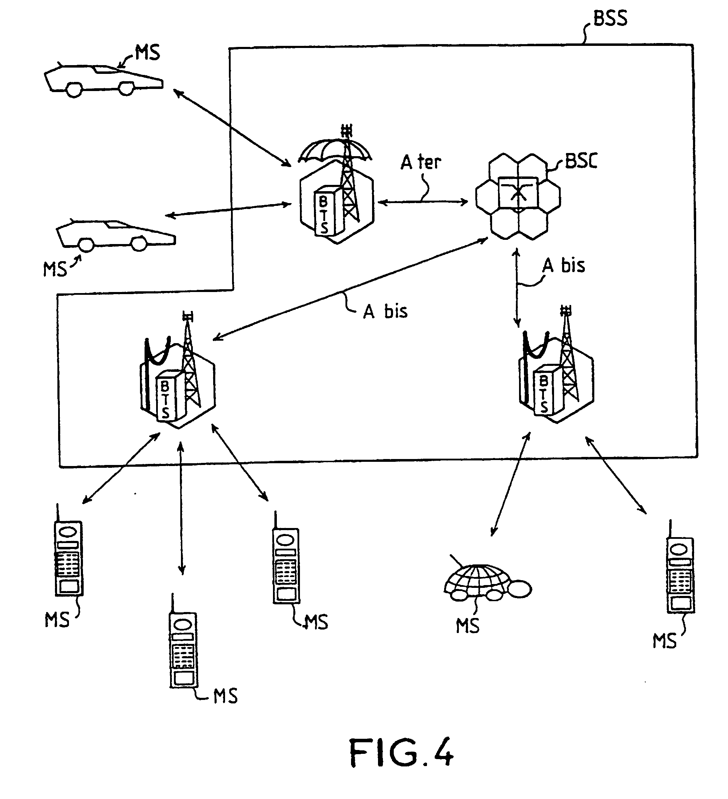

Une configuration typique de dialogue entre les stations MS, BTS et BSC est montrée à la figure 3. Dans cette configuration les stations MS dialoguent à travers les interfaces indiquées précédemment en utilisant des protocoles normalisés. L'adaptation selon l'invention du réseau GSM de la figure 3 à un réseau comportant des microcellules entourées par des macrocellules parapluie a lieu en incorporant, de la façon représentée à la figure 4, à la station de base BTS de chaque cellule parapluie une station de goniométrie GS disposant d'aériens situés dans des endroits dégagés au-dessus de bâtiments. Le contrôleur de station de base BSC la charge de gérer par une nouvelle interface "Ater" le trafic à l'intérieur de la cellule parapluie. Le contrôleur BSC est en relation par l'interface normalisée "Abis" avec les stations de base BTS des microcellules. Les stations de base BTS des microcellules sont comme dans le cas de la figure 3, chargées de gérer les stations mobiles MS se trouvant dans leur cellule, à condition toutefois qu'elles. aient une vitesse inférieure à un seuil déterminé. Les stations mobiles qui ont une vitesse supérieure seront gérées directement par la station de base BTS de la macrocellule parapluie.

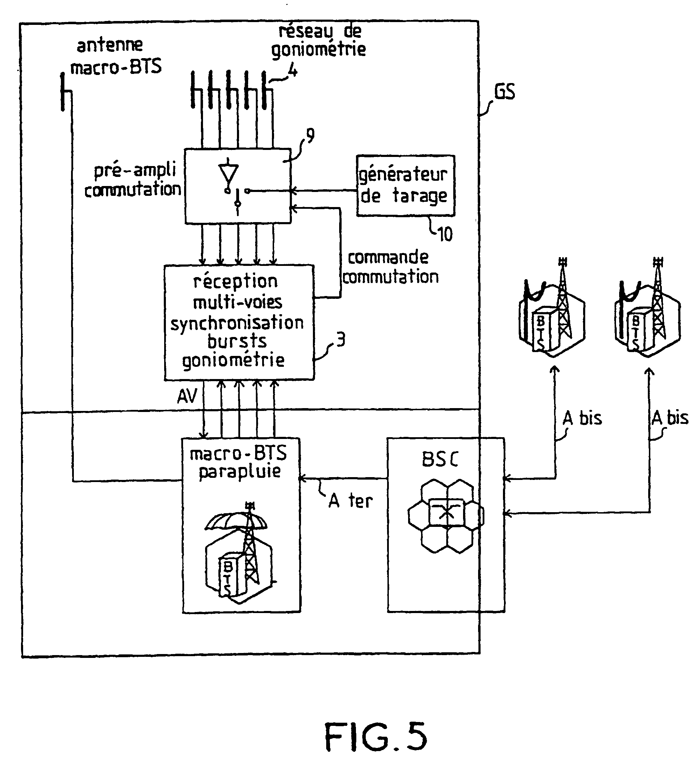

La détection d'une vitesse de déplacement d'une station mobile s'effectue soit de façon grossière en comptant dans la macrocellule, aux moyens de l'interface Abis, le nombre de transferts de communications entre cellules lorsque la station mobile quitte le territoire d'une microcellule pour passer sur le territoire d'une microcellule adjacente, soit de façon plus précise en estimant la vitesse à partir d'une visée goniométrique effectuée par la radiogoniomètre de la station parapluie. Un radiogoniomètre susceptible d'effectuer cette visée peut être le radiogoniomètre utilisant l'antenne connue sous la désignation TRC 2966 et commercialisée par la Demanderesse. Ce radiogoniomètre comporte de la façon représentée à la figure 5, un ensemble de réception multivoies 3 couplé à un réseau d'antenne 4 par l'intermédiaire de préamplificateurs de commutation 9 associée à un générateur de tarage des voies 10. L'ensemble de réception multivoies 3 est synchronisé sur la station BTS afin de permettre la localisation angulaire des stations mobiles MS en profitant du meilleur rapport signal à bruit. L'ensemble 3 reçoit de la station BTS

- un top de synchronisation lui permettant d'ouvrir des fenêtres de réception dans lesquelles doivent se trouver les bursts des signaux attendus des stations mobiles ;
- une commande en fréquence pour positionner les récepteurs multivoies sur les fréquences des stations mobiles ;
- un indicateur pour signaler chaque type de burst attendu ;

et un code pour indiquer le numéro de séquence à rechercher dans le cas d'un trafic burst.

Sur cette base un processeur, non représenté et appartenant à l'ensemble de réception 3 effectue une recherche de synchronisation sur les bursts de stations mobiles recherchées pour effectuer ensuite une goniométrie sur ces bursts, afin de déterminer pour chaque station mobile recherchée, l'angle d'arrivée des bursts des signaux correspondant, la station BTS combine cette information avec la distance la séparant de la station de base parapluie, afin de déterminer sa vitesse de déplacement.

La recherche de la synchronisation a lieu de façon connue en corrélant la séquence de référence de chaque "burst" recherché avec le signal reçu sur un horizon correspondant à l'incertitude de réception des "bursts" GSM qui est typiquement de 8,25 symboles. Cette recherche s'effectue classiquement suivant quatre étapes. La première étape consiste à estimer la matrice de corrélation des signaux reçus sur les N antennes du réseau 4. En désignant par x(t) le vecteur des enveloppes complexes des signaux reçus sur les N antennes la matrice de corrélation $R_x$ s'écrit :

$$R_x = E [x(t). x(t)^+] \qquad (1)$$

où E est un symbole pour désigner l'espérance mathématique et x(t) + désigne le vecteur transposé conjugué de x(t).

La deuxième étape consiste à estimer un vecteur de corrélation Vxd(p) d'un signal complexe d représentant la séquence de référence du burst des signaux reçus avec chaque vecteur X des enveloppes complexe de signaux reçus sur les N antennes du réseau 4 suivant la relation :

$$Vxd(p) = \Sigma \ x(n+p). \ d(n) \qquad (2)$$

où p représente les différentes positions possibles de la synchronisation.

L'estimation de la position de la synchronisation a lieu suivant une troisième étape en calculant un vecteur V tel que

$$V = Vxd^*.R_x^{-1}.Vxd \qquad (3)$$

où Vxd est le vecteur conjugué de Vxd.

Enfin la quatrième étape consiste à rechercher la valeur maximum de l'estimation de la synchronisation qui positionne au plus juste les voies de réception sur le rapport signal à bruit le plus favorable.

La détermination de l'angle d'arrivée des bursts de signaux peut être réalisée à partir de différentes méthodes et notamment en utilisant l'algorithme connu sous la désignation MUSIC qui est l'abréviation anglosaxonne de Multiple Signal Classification. Une description de cet algorithme peut être trouvée notamment en consultant l'article de R.O.SCHMIDT ayant pour titre "Multiple Emitter Location and Signal parameter estimation system" publiée dans la revue IEEE de mars 1986.

L'algorithme se décompose en un calcul d'une matrice de corrélation Rxx des signaux appliqués sur les N antennes du radiogoniomètre, à une diagonalisation et une décomposition en vecteurs propres de la matrice Rxx, puis en une détection des valeurs propres minimum pour la détermination de l'angle d'arrivée des ondes sur le réseau d'antennes.

La détermination de la distance s'effectue à partir d'une détermination du temps de propagation de l'onde radio entre la station mobile et la station de base de la macrocellule parapluie.

L'accès au réseau GSM est basé sur le principe d'un multiplexage temporel TDMA. Pour se faire la station de base BTS qui est maîtresse du temps alloue à chaque station mobile une fenêtre temporelle durant laquelle la station mobile interrogée est censée répondre. Le début de la fenêtre est considéré être l'instant d'arrivée de la réponse de la station mobile lorsque celle-ci se trouve à une distance nulle de la station de base.

Lorsque la station mobile est éloignée de la station de base, la réponse de la station mobile intervient à instant plus tard décalé par rapport au début de la fenêtre. Ce décalage détermine la distance qui sépare la station mobile MS de la station de base BTS. Cette procédure qui porte le nom de "Timing advance" dans la norme GSM sert à renvoyer à la station mobile MS le décalage temporel mesuré pour anticiper l'émission de la séquence des bits d'informations de la durée de ce décalage afin que les informations qu'elle transmet puissent être totalement reçues à l'intérieur de la fenêtre temporelle que lui attribue la station de base.

En effectuant par exemple ces mesures à un rythme de deux mesures par secondes il est possible de compenser le décalage temporel par la procédure de "Timing advance" pour des vitesses de déplacement des stations mobiles allant jusqu'à 500 km/H.

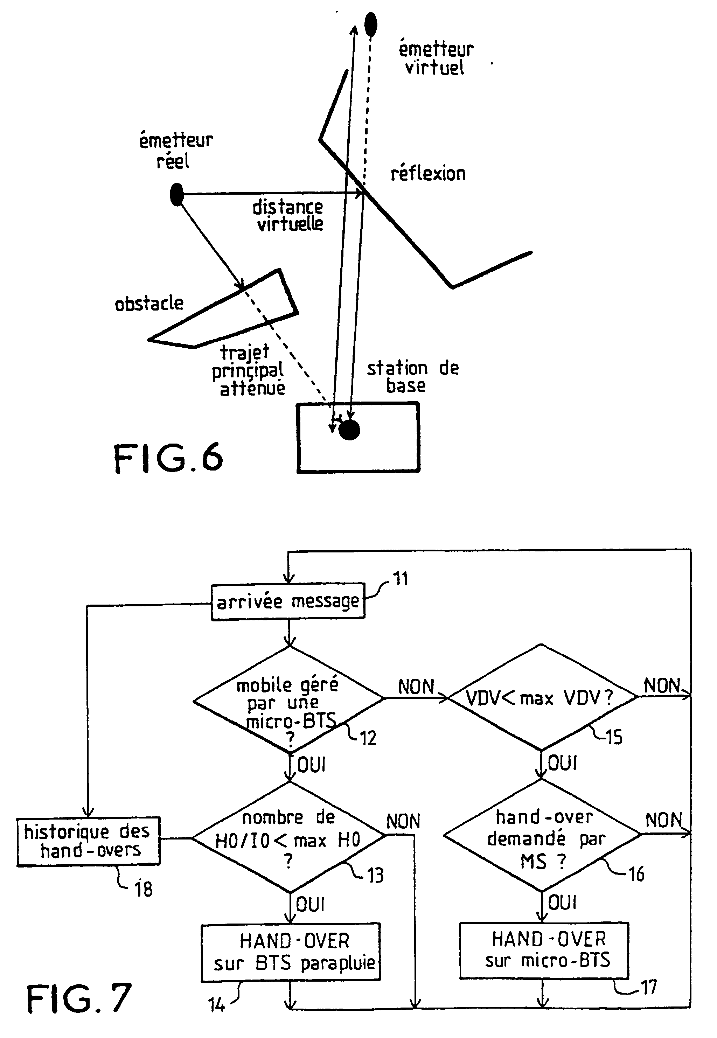

Compte-tenu du fait qu'en milieu urbain la synchronisation peut être obtenue sur un trajet de propagation des ondes radio par réflexions sur des façades d'immeubles, le contrôleur de station de base BSC détermine dans ce cas une distance virtuelle DV représentée sur la figure 6, qui est défini à partir du décalage temporel TA exprimé en nombre de symboles, par la relation

$$DV = \frac{TA}{2}\left(\frac{48}{13}\right)10^{-6} \times 310 \qquad (4)$$

où $\frac{48}{13}$ $10^{-6}$ représente dans la norme GSM la durée d'un symbole de modulation GMSM.

Une position virtuelle de la station mobile est déterminée relativement à la station de base de la macrocellule parapluie en combinant la distance virtuelle avec l'angle virtuel d'arrivée de l'onde radio par les relations

$$XV = DV \cos (AV) \qquad (5)$$

$$YV = DV \sin (AV) \qquad (6)$$

où AV désigne l'azimut virtuel de la station mobile déterminé par l'exécution de l'algorithme MUSIC décrit précédemment.

Ces éléments de position cartésienne sont associés à chaque mobile

Ils sont utilisés et combinés afin d'en déduire leurs vitesses de déplacement virtuelle.

Comme indiqué précédemment, la position exacte du mobile par rapport à la station de base de la macrocellule parapluie ne peut être déterminée avec précision du fait de la présence en milieu urbain de réflecteurs multiples qui provoquent des multitrajets. Dans ces conditions seule la distance de déplacement du mobile entre deux mesures apparaît suffisante. Pour obtenir ce trajet l'algorithme utilisé consiste à prendre deux positions virtuelles successives du même mobile respectivement $XV_1$, $XV_2$, et $YV_1$ et $YV_2$ pour calculer sa vitesse de déplacement virtuelle (VDV) par la relation :

$$VDV = \frac{\sqrt{(XV_1 - XV_2)^2 + (YV_1 - YV_2)^2}}{TI} \qquad (7)$$

où TI est le temps d'intégration qui correspond à la durée séparant deux mesures de distance du même mobile.

Cette opération est réalisée dans la station de base de la macrocellule parapluie à partir de l'information d'azimut virtuel fourni par la goniométrie.

L'information de vitesse du déplacement virtuel est transmise au contrôleur de station de base de la macrocellule à l'aide d'une interface "Ater" qui présente les même caractéristiques que l'interface normalisée "Abis".

La gestion des transferts entre micro et cellule parapluie est alors déterminée en fonction des vitesses de déplacement virtuelle calculées. Cette gestion s'exécute suivant les étapes 11 à 18 de l'organigramme de la figure 7. A l'arrivée d'un message d'une station mobile en communication, figurée à l'étape 9, un test a lieu à l'étape 10 pour déterminer si la station mobile MS est sous le contrôle d'une station de base d'une microcellule ou d'une station de base d'une cellule parapluie. Dans le premier cas l'étape 13 vérifie le nombre de transferts en ou "Handovers" Ho entre microcellules effectués récemment par la station mobile. Si le taux Ho/To obtenu durant le temps d'observation To est supérieur à un paramètre de valeur maximum maxHo, alors le contrôleur de la station de base BSC de la cellule parapluie demande que le transfert soit effectué vers la station de base de la cellule parapluie. Dans le cas contraire la station mobile continue d'être gérée par les microstations de base.

Dans le deuxième cas, l'étape 15 vérifie que la vitesse de déplacement virtuel mesurée n'est pas supérieure à une valeur de seuil déterminée.

Si la vitesse est relativement faible, la station mobile est autorisée à effectuer un transfert vers une microstation BTS, si elle en fait la demande à l'étape 16.

## Revendications

1.   Procédé de gestion du transfert intercellulaire de communications de stations mobiles (MS) dans un système de radiocommunication cellulaire comportant un nombre déterminé de microcellules (2) à l'intérieur de cellules parapluie (1) possédant chacune respectivement une station de base (BTS) pour permettre l'acheminement des communications, **caractérisé en ce qu'**il consiste lorsque la station (MS) est sous le contrôle d'une station de base d'une microcellule à compter le nombre de transferts (Hand Over) $H_o$ effectuées entre microcellules (2) par la station mobile (MS) durant un intervalle d'observation déterminé $T_o$, à calculer un taux de transfert $H_o/T_o$ pour effectuer le transfert des communications vers la station parapluie (1) lorsque le taux de transfert est supérieur à une valeur de seul déterminée, à maintenir le transfert des communications vers la station de base de la microcellule (2) lorsque le taux de transfert est inférieur à la valeur de seuil déterminée et **en ce qu'**il consiste lorsque la station mobile (MS) est sous le contrôle d'une cellule parapluie (1) à mesurer par une goniométrie une vitesse de déplacement virtuelle de la station mobile (MS) relativement à la station de base de la cellule parapluie (1) de façon à effectuer un transfert des communications vers une station de base d'une microcellule lorsque la vitesse mesurée par la goniométrie est inférieur à une valeur de seuil déterminée.

2.   Procédé selon la revendication 1, **caractérisé en ce qu'**il consiste à repérer par une radiogoniométrie au moins deux positions virtuelles successives des stations mobiles (MS) en communication relativement à la station de base de la cellule parapluie pour en déduire une vitesse de déplacement (VDV) de chaque mobile dans l'intervalle de temps qui sépare (TI) le repérage de leurs positions, à comparer respectivement les vitesses de déplacement obtenus à une valeur de vitesse déterminée pour confier la gestion des communications d'une station mobile (MS) à la station de base (BTS) de la cellule parapluie (1) dans laquelle elle se trouve lorsque sa vitesse est supérieure à la valeur de vitesse déterminée, ou aux stations de base (BTS) des microcellules (2) dans le cas contraire.

3.   Procédé selon la revendication 2, **caractérisé en ce qu'**il consiste à repérer la position des stations mobiles en azimut et distance.

4.   Procédé selon la revendication 3, **caractérisé en ce que** le repérage en azimut s'effectue à l'aide d'un radiogoniomètre multivoies en déterminant l'angle d'arrivée des ondes électromagnétique transmettant les signaux de chaque station mobile.

5.   Procédé selon la revendication 4, **caractérisé en ce qu'**il consiste à synchroniser le radiogoniomètre sur la station de base de la cellule parapluie pour permettre une localisation angulaire des stations mobiles (MS) avec le meilleur rapport signal à bruit.

6. Procédé selon l'une quelconque des revendications 2 à 5, **caractérisé en ce qu'**il consiste à déterminer la distance séparant une station mobile (MS) de la station de base d'une cellule parapluie en mesurant dans la station de base (BTS) le temps de propagation des ondes radio entre les deux stations.

7. Procédé selon l'une quelconque des revendications 1 à 6, **caractérisé en ce que** les stations mobiles communiquent avec les stations de base suivant des interfaces et des protocoles qui sont ceux du réseaux de radiocommunications cellulaire GSM.

## Claims

1. Process for managing the intercellular transfer of communications from mobile stations (MS) in a cellular radio communication system comprising a specified number of microcells (2) inside umbrella cells (1) each respectively possessing a base station (BTS) for allowing the routing of the communications, **characterized in that** it consists, when the station (MS) is under the control of a base station of a microcell, in counting the number of transfers (handover) $H_0$ performed between microcells (2) by the mobile station (MS) during a specified observation interval $T_0$, in calculating a rate of transfer $H_0/T_0$ for performing the transfer of the communications to the umbrella station (1) when the rate of transfer is greater than a specified threshold value, in maintaining the transfer of communications to the base station of the microcell (2) when the rate of transfer is below the specified threshold value and **in that** it consists, when the mobile station (MS) is under the control of an umbrella cell (1), in using direction finding to measure a virtual speed of movement of the mobile station (MS) in relation to the base station of the umbrella cell (1) in such a way as to perform a transfer of the communications to a base station of a microcell when the speed measured by the direction finding is below a specified threshold value.

2. Process according to Claim 1, **characterized in that** it consists in using radio direction finding to pinpoint at least two successive virtual positions of the mobile stations (MS) in communication in relation to the base station of the umbrella cell so as to deduce therefrom a speed of movement (VDV) of each mobile in the time interval which separates (TI) the pinpointing of their positions, in respectively comparing the speeds of movement obtained with a specified speed value so as to entrust the management of the communications from a mobile station (MS) to the base station (BTS) of the umbrella cell (1) in which it lies when its speed is greater than the specified speed value, or to the base stations (BTS) of the microcells (2) in the contrary case.

3. Process according to Claim 2, **characterized in that** it consists in pinpointing the position of the mobile stations in terms of azimuth and distance.

4. Process according to Claim 3, **characterized in that** the azimuthal pinpointing is performed with the aid of a multichannel radio direction finder by determining the angle of arrival of the electromagnetic waves transmitting the signals from each mobile station.

5. Process according to Claim 4, **characterized in that** it consists in synchronizing the radio direction finder to the base station of the umbrella cell so as to allow angular locating of the mobile stations (MS) with the best signal-to-noise ratio.

6. Process according to any one of Claims 2 to 5, **characterized in that** it consists in determining the distance separating a mobile station (MS) from the base station of an umbrella cell by measuring, in the base station (BTS), the time of propagation of the radio waves between the two stations.

7. Process according to any one of Claims 1 to 6, **characterized in that** the mobile stations communicate with the base stations in accordance with interfaces and protocols which are those of the GSM cellular radio communication network.

## Patentansprüche

1. Verfahren zur Handhabung des interzellulären Weiterreichens von Gesprächen von Mobilstationen (MS) in einem Zellularfunksystem mit einer bestimmten Anzahl von Mikrozellen (2) innerhalb von Dachzellen (1) jeweils mit einer Basisstation (BTS), um den Transport der Gespräche zu erlauben, **dadurch gekennzeichnet, daß** es folgendes umfaßt: wenn die Station (MS) unter der Kontrolle einer Basisstation einer Mikrozelle ist, Zählen der Anzahl von Weiterschaltungen (Hand Overs) $H_0$, die von der Mobilstation (MS) während eines bestimmten Beobachtungszeitraums $T_0$ zwischen Mikrozellen (2) bewirkt worden sind, zum Berechnen einer Weiterschaltungsrate $H_0/T_0$ zum Bewirken des Weiterreichens der Gespräche zu der Dachstation (1), wenn die Weiterschaltungsrate höher als ein bestimmter Schwellwert ist, zum Aufrechterhalten des Weiterreichens der Gespräche zu der Basisstation der Mikrozellen (2), wenn die Weiterschaltungsrate geringer als der bestimmte Schwellwert ist und daß es folgendes umfaßt: wenn die Mobilstation (MS) unter der Steuerung einer Dachzelle (1) ist, Messen durch Winkelmessung einer virtuellen Fahrgeschwindigkeit der Mobilstation (MS) in bezug auf die Basisstation der Dachzelle (1), um ein Weiterreichen der Gespräche zu einer Basisstation einer Mikrozelle zu bewirken, wenn die von der Winkelmessung gemessene Geschwindigkeit unter einem bestimmten Schwellwert liegt.

2. Verfahren nach Anspruch 1, **dadurch gekennzeichnet, daß** es folgendes umfaßt: Kennzeichnen durch eine Funkwinkelmessung von mindestens zwei aufeinanderfolgenden virtuellen Positionen der kommunizierenden Mobilstationen (MS) in bezug auf die Basisstation der Dachzelle, um daraus eine Fahrtgeschwindigkeit (VDV) jedes Mobilgeräts in dem Zeitraum, der die Kennzeichnung ihrer Positionen trennt (TI) abzuleiten, Vergleichen der jeweiligen erhaltenen Fahrtgeschwindigkeiten mit einem bestimmten Geschwindigkeitswert, um die Verwaltung der Gespräche einer Mobilstation (MS) zu der Basisstation (BTS) der Dachzelle (1) zu übertragen, in der sie sich befindet, wenn ihre Geschwindigkeit höher als der bestimmte Geschwindigkeitswert ist, oder Basisstationen (BTS) von Mikrozellen (2) im gegenteiligen Fall.

3. Verfahren nach Anspruch 2, **gekennzeichnet durch** Kennzeichnen der Position der Mobilstationen in Azimut und Entfernung.

4. Verfahren nach Anspruch 3, **dadurch gekennzeichnet, daß** die Kennzeichnung in Azimut mit Hilfe einer Mehrwege-Funkwinkelmessung durch Bestimmung des Ankunftswinkels der die Signale jeder Mobilstation übertragenden elektromagnetischen Wellen bewirkt wird.

5. Verfahren nach Anspruch 4, **gekennzeichnet durch** Synchronisieren der Funkwinkelmessung an der Basisstation der Dachzelle, um eine Winkelortung der Mobilstationen (MS) mit dem besten Signal-Rausch-Verhältnis zu erlauben.

6. Verfahren nach einem beliebigen der Ansprüche 2 bis 5, **gekennzeichnet durch** Bestimmen der eine Mobilstation (MS) von der Basisstation einer Dachzelle trennenden Entfernung **durch** Messen in der Basisstation (BTS) der Ausbreitungszeit der Funkwellen zwischen den zwei Stationen.

7. Verfahren nach einem beliebigen der Ansprüche 1 bis 6, **dadurch gekennzeichnet, daß** die Mobilstationen mit den Basisstationen entsprechend Schnittstellen und Protokollen kommunizieren, die die des Zellularfunknetzes GSM sind.

FIG.1

FIG.2

**FIG.3**

FIG.4

antenne
macro-BTS

réseau de
goniométrie
4

GS

pré-ampli
commutation

9

générateur
de tarage

10

commande
commutation

réception
multi-voies
synchronisation
bursts
goniométrie

3

AV

macro-BTS
parapluie

BSC

A bis

A bis

A ter

FIG.5

émetteur
virtuel

émetteur
réel

réflexion

distance
virtuelle

obstacle

trajet
principal
atténué

station de
base

## FIG.6

arrivée message — 11

mobile géré
par une
micro-BTS
? — 12    NON → VDV < max VDV ? — 15    NON →

OUI    OUI

historique des
hand-overs — 18    nombre de
HO/IO < max HO
? — 13    NON    hand-over
demandé par
MS ? — 16    NON →

OUI    OUI

HAND-OVER
sur BTS parapluie
14    HAND-OVER
sur micro-BTS — 17

## FIG.7